# EUROPÄISCHE PATENTSCHRIFT

(11) **EP 2 923 121 B1**
(45) Veröffentlichungstag und Bekanntmachung des Hinweises auf die Patenterteilung: **10.04.2019**
(21) Anmeldenummer: 13817865.2
(22) Anmeldetag: 19.11.2013
(51) Int. Cl.: F16H 61/02, F16H 61/688, F16H 57/04

(54) **HYDRAULISCHE STEUERUNG**
HYDRAULIC CONTROLLER
COMMANDE HYDRAULIQUE

(30) Priorität: 26.11.2012 DE 102012221547; 10.06.2013 DE 102013210790
(43) Veröffentlichungstag der Anmeldung: 30.09.2015
(73) Patentinhaber: Schaeffler Technologies AG & Co. KG, 91074 Herzogenaurach (DE)
(72) Erfinder: GRETHEL, Marco, 77830 Bühlertal (DE); WILLEKE, Roshan, 77855 Achern (DE)
(86) Internationale Anmeldenummer: PCT/DE2013/200308
(87) Internationale Veröffentlichungsnummer: WO 2014/079441

(56) Entgegenhaltungen:
- EP-A2- 1 916 457
- US-A1- 2006 006 043
- US-A1- 2011 042 177

## Beschreibung

Die Erfindung betrifft eine hydraulische Steuerung zum Ansteuern einer Mehrzahl von hydraulischen Schaltzylindern, insbesondere Schaltzylindern zum Schalten von Gängen eines Doppelkupplungsgetriebes, enthaltend zumindest ein Hauptdruckventil VSys, mindestens drei Gangstellerventile VGQ, mindestens zwei Kühlölventile VKU sowie ein Kühlkreisvorspannventil VMD.

Zur Realisierung der geforderten Funktionen, wie beispielsweise Gangschaltaktorik, Kupplungsaktorik (Kupplungsdruck), Kühlölbereitstellung, Druckregelung für den Hauptdruck des Systems und für die Teilgetriebe sind bereits verschiedene Verschaltungen von Ventilen und anderen hydraulischen Bauelementen wie zum Beispiel Drosseln oder Blenden oder Sensoren für Druck- und Volumenstrom, beispielsweise aus der EP 1 916 457 A2 oder der US 2011/042177 A1, bekannt. Die meisten verwendeten Ventile sind an sich bekannt und entsprechen somit dem Stand der Technik.

Allerdings werden relativ viele Ventile, Elektromagnete und Sensoren benötigt, um alle Funktionen zu gewährleisten. Es ist daher die Aufgabe der vorliegenden Erfindung, eine möglichst kostengünstige hydraulische Steuerung für ein Doppelkupplungsgetriebe mit zwei Kupplungen, vier Schaltgabeln (8 Gänge) und Kupplungskühlung bereitzustellen. Optional soll die Steuerung auch eine Park by wire Funktionalität darstellen können. Weiterhin soll der Energiebedarf der Getriebesteuerung so gering wie möglich gehalten werden bei möglichst niedrigen Herstellkosten für die Hydraulik.

Die Aufgabe wird mittels verschiedenen hydraulischen Verschaltungen gelöst, bei denen nahezu identische Elektromagnete, mit möglichst wenigen Ventilen und Elektromagneten, vorgesehen sind. Aufgrund der hohen Stückzahlen sind somit geringe Kosten möglich. Die erfinderische Lösung besteht in der Verschaltung der Hydraulik und der Teilgetriebe. In einem weiteren Aspekt der Erfindung kann die erforderliche Hydraulikpumpe elektrisch und/oder mittels eines Verbrennungsmotors angetrieben sein. Die Pumpe kann optional in die Steuerung integriert oder extern angeordnet sein.

Die vorab angegebene Aufgabe wird mit den Merkmalen des Patentanspruchs 1 gelöst. Die Ventile sind dabei so verschaltet sind, dass eine Mehrzahl von identischen oder nahezu identischen Elektromagneten verwendet werden kann. Durch die Verwendung von möglichst vielen identischen oder nahezu identischen Elektromagneten können die Herstellkosten reduziert werden. Die Kühlventile VKU sind mittels eines gemeinsamen Pilotventils VKUvst vorgesteuert. Mit dem einen zusätzlichen Pilotventil VKUvst mit einem Elektromagneten können zwei Elektromagnete an den Kühlölventilen VKU entfallen. Die Umsetzung des Kennlinienverhaltens der beiden Kühlölventile VKU kann unter anderem durch eine "fallende" und eine "steigende" Ventilkennlinie (zum Beispiel VKU1 fallend - VKU2 steigend) gelöst werden, beziehungsweise alternativ mit verschiedenen Federvorspannungen der Ventile. Gemäß einem Ausführungsbeispiel weisen beide Kühlölventile VKU eine fallende Kennlinie auf. Damit wird der Strombereich (Regel/Steuerbereich) eines Magneten auf zwei Ventile aufgeteilt. Aufgrund des Entfalls eines Elektromagneten inklusive seiner Ansteuerung und des Bauraums ergibt sich eine signifikante Kostenersparnis. Für diese Einsparung wird bewusst eine geringere Auflösung des Verhältnisses elektrischer Strom zu Volumenstrom (Liter pro Minute pro Milliampere) in Kauf genommen, da die Kraft-Strom-Kennlinie des Elektromagneten jetzt für beide Ventile verwendet werden muss (circa fünfzig Prozent Ausnutzung pro Ventil).

Ein bevorzugtes Ausführungsbeispiel der hydraulischen Steuerung ist dadurch gekennzeichnet, dass mindestens ein Teilgetriebedruckregler als direkt gesteuertes Ventil ausgeführt ist, insbesondere zwei Teilgetriebedruckregler als direkt gesteuerte Ventile ausgeführt sind. Somit kann eine Teilgetriebevorsteuerung entfallen. Aufgrund des Entfalls der Vorsteuerventile werden je ein Kolben und eine Feder sowie Bauraum und der Aufwand für Ventilbohrungen eingespart. Im Gegenzug für die Einsparung wird eine höhere Anfälligkeit gegenüber Strömungskräften an dem direkt gesteuerten Teilgetriebedruckregler aufgrund des kleineren Öffnungshubs der Steuerkante des direkt gesteuerten Teilgetriebedruckreglers in Kauf genommen. Ein geringerer Strömungsquerschnitt führt zu einem höheren Druckabfall am Ventil.

Ein weiteres bevorzugtes Ausführungsbeispiel der hydraulischen Steuerung ist dadurch gekennzeichnet, dass ein Systemhauptdruck mittels Druckrückführungen von zwei Kupplungsdrücken eingestellt wird. Der Systemhauptdruck wird vorzugsweise mit einem festen Offset mittels Druckrückführungen der beiden Kupplungsdrücke eingestellt. Mit Hilfe eines Oder-Glieds wird vorteilhaft der höchste Kupplungsdruck als Pilotdruck zugeführt. Das System stellt den Systemdruck abhängig vom benötigten Kupplungsdruck selbst ein.

Der Offsetdruck muss dabei so gewählt werden, dass bei Null bar Kupplungsdruck der Systemdruck immer noch ausreichend hoch für die anderen Verbraucher, zum Beispiel die Gangsteller, ist. Bei dieser Variante entfällt das Hauptdruckpilotventil mit Elektromagnet, wodurch ein Elektromagnet inklusive seiner Ansteuerung, Kolben und Feder sowie Bauraum und Ventilbohrung eingespart sind. Dafür wird in Kauf genommen, dass keine aktive Eingriffsmöglichkeit mehr bei der Hauptdruckniveaueinstellung besteht. Es wird immer ein konstanter Offset zum aktuell höchsten Kupplungsdruck eingestellt.

Ein weiteres bevorzugtes Ausführungsbeispiel der hydraulischen Steuerung ist dadurch gekennzeichnet, dass der Systemhauptdruck zusätzlich mittels eines Kühlöldrucks eingestellt wird. Diese Ausführungsform unterscheidet sich von der vorab beschriebenen Ausführungsform dadurch, dass zusätzlich noch der Kühlöldruck oder Kühlölversorgungsdruck mit Hilfe eines weiteren Oder-Glieds steuerungsmäßig angebunden ist. Es wird immer ein konstanter Offset zum aktuell höchsten Kupplungsdruck beziehungsweise Kühlölversorgungsdruck eingestellt, je nachdem, welcher der drei Drücke am höchsten ist. Alternativ oder zusätzlich kann beziehungsweise können anstatt der Rückführung der zwei Kupplungsdrücke auch ein Teilgetriebedruck oder zwei Teilgetriebedrücke in gleicher Form zurückgeführt werden.

Ein weiteres bevorzugtes Ausführungsbeispiel der hydraulischen Steuerung ist dadurch gekennzeichnet, dass eine Teilgetriebedruckregelung nur einen zentralen Teilgetriebedruckregler VpTG umfasst. Der zentrale Teilgetriebedruckregler VpTG kann direkt gesteuert oder vorgesteuert sein. Bei der vorgesteuerten Variante können gegebenenfalls ein Elektromagnet einschließlich Ansteuerung, zwei Ventilkolben und zwei Federn, zwei Bohrungen und der entsprechende Bauraum entfallen, so dass sowohl Kosten als auch Bauraum eingespart werden. Der zentrale Teilgetriebedruckregler VpTG kann in Reihe zu Kupplungsdruckventilen VKP geschaltet sein.

Ein weiteres bevorzugtes Ausführungsbeispiel der hydraulischen Steuerung ist dadurch gekennzeichnet, dass der zentrale Teilgetriebedruckregler VpTG in Reihe zwischen das Hauptdruckventil und eine Gangstellaktorik geschaltet ist. Das liefert den Vorteil, dass nur ein Druckregler für die Gangstellaktorik verwendet wird. Hier entfällt ein Teilgetriebedruckregler, der verbleibende Teilgetriebedruckregler kann direkt gesteuert oder vorgesteuert sein. Auf diese Weise können gegebenenfalls ein Elektromagnet inklusive seiner Ansteuerungen, zwei Ventilkolben und zwei Federn, zwei Bohrungen und der entsprechende Bauraum eingespart werden.

Ein weiteres bevorzugtes Ausführungsbeispiel der hydraulischen Steuerung ist dadurch gekennzeichnet, dass zwei Teilgetriebe direkt mit einem beziehungsweise dem Systemhauptdruck beaufschlagt sind. Das liefert den Vorteil, dass beide Teilgetriebedruckregler entfallen, wodurch gegenüber der vorab beschriebenen Ausführungsform mit dem zentralen Teilgetriebedruckregler VpTG die doppelte Einsparung erfolgen kann. Bei der vorgesteuerten Variante können zwei Elektromagnete einschließlich der Ansteuerungen, vier Ventilkolben und vier Federn, vier Bohrungen und der entsprechende Bauraum entfallen. Um diese Einsparungen zu realisieren, wird bewusst in Kauf genommen, dass die Teilgetriebedrücke nicht mehr regelbar sind und eventuell eine höhere Leckage auftritt. Weiterhin können Systemdruckschwankungen einen stärkeren Einfluss auf die Kupplungs- und Gangstellerventile haben.

Ein weiteres bevorzugtes Ausführungsbeispiel der hydraulischen Steuerung ist dadurch gekennzeichnet, dass die hydraulische Steuerung eine Hydraulikpumpe umfasst, die elektrisch und/oder mittels eines Verbrennungsmotors angetrieben ist. Die Hydraulikpumpe kann in die hydraulische Steuerung integriert sein. Die Hydraulikpumpe kann aber auch außerhalb der hydraulischen Steuerung angeordnet sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine erfindungsgemäße Hydrauliksteuerung mit einem Teilgetriebedruckregler, der als direkt gesteuertes Ventil ausgeführt ist;
- Figur 2: eine erfindungsgemäße Hydrauliksteuerung, bei der die Kühlölventile mittels eines gemeinsamen Pilotventils vorgesteuert sind;
- Figur 3: eine erfindungsgemäße Hydrauliksteuerung, bei der ein Systemhauptdruck mittels Rückführung von zwei Kupplungsdrücken eingestellt wird;
- Figur 4: eine erfindungsgemäße Hydrauliksteuerung, bei welcher der Systemhauptdruck zusätzlich mittels eines Kühlöldrucks eingestellt wird;
- Figur 5: eine erfindungsgemäße Hydrauliksteuerung, bei der eine Teilgetriebedruckregelung nur einen zentralen Teilgetriebedruckregler umfasst;
- Figur 6: eine erfindungsgemäße Hydrauliksteuerung, bei der zwei Teilgetriebe direkt mit einem beziehungsweise dem Systemhauptdruck beaufschlagt sind und
- Figur 7: eine erfindungsgemäße Hydrauliksteuerung, bei welcher der zentrale Teilgetriebedruckregler mit Kupplungsdruckventilen verschaltet ist.

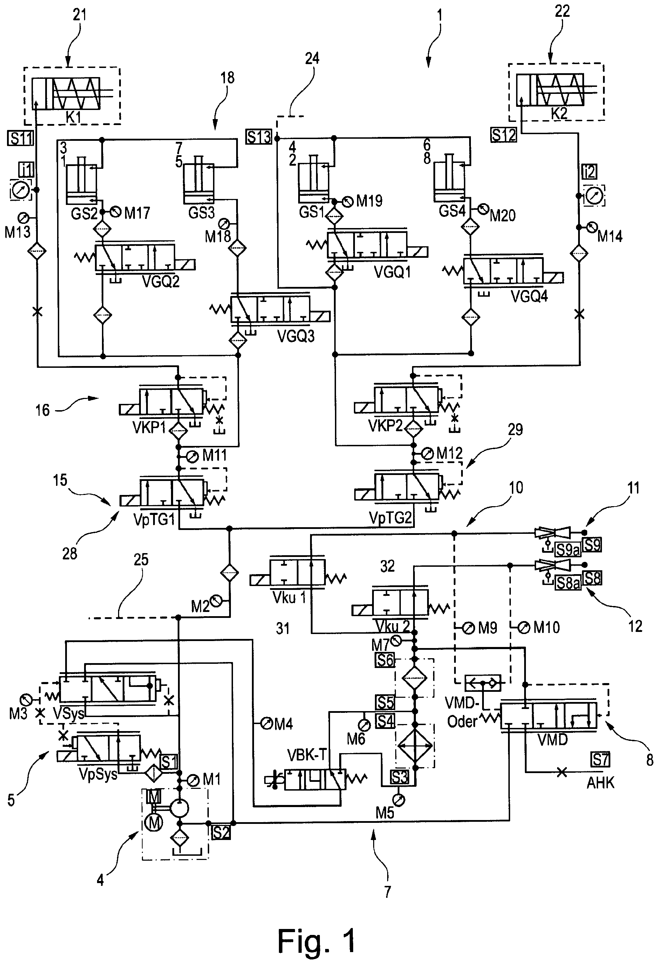

In den Figuren 1 bis 7 sind sieben Ausführungsformen 1; 30; 40; 50; 60, 70; 80 einer erfindungsgemäßen Hydrauliksteuerung in Form von Hydraulikschaltplänen dargestellt. Zur Bezeichnung gleicher oder ähnlicher Teile werden in den Figuren 1 bis 7 die gleichen Bezugszeichen verwendet. Im Folgenden werden zunächst gemeinsame Merkmale der unterschiedlichen Ausführungsformen beschrieben. Im Anschluss daran wird nur auf die Unterschiede zwischen den einzelnen Ausführungsformen eingegangen.

Die in den Figuren 1 bis 7 in verschiedenen Ausführungsformen der Erfindung dargestellte hydraulische Steuerung 1; 30; 40; 50; 60, 70; 80 umfasst als Hydraulikdruckquelle eine Hydraulikpumpe 4, die elektrisch und/oder mechanisch angetrieben ist. Die Hydraulikpumpe 4 saugt Hydraulikmedium, insbesondere Hydrauliköl, das verkürzt auch als Öl bezeichnet wird, aus einem Hydraulikmediumreservoir an. Das angesaugte Hydraulikmedium wird durch die Hydraulikpumpe 4 mit Druck beaufschlagt. Am Ausgang der Hydraulikpumpe 4 wird mit Hilfe einer Hauptdruckventileinrichtung 5 ein Hauptdruck oder Systemdruck eingestellt.

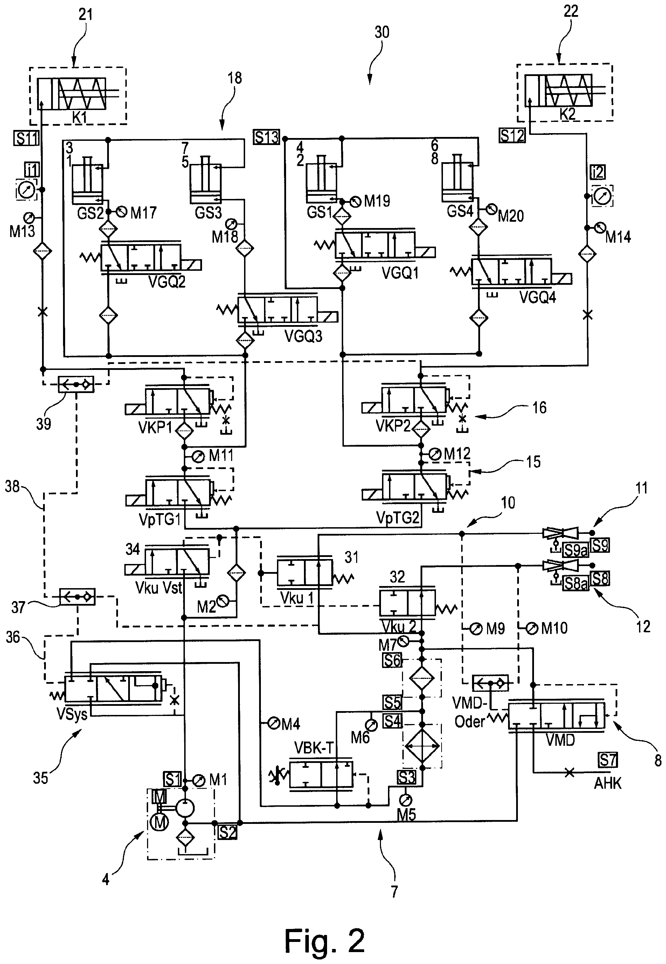

Die Hauptdruckventileinrichtung 5 umfasst bei den in den Figuren 1, 5, 6 und 7 dargestellten Ausführungsformen ein Hauptdruckventil Vsys, das durch ein Pilotventil VpSys vorgesteuert ist. Bei den Ausführungsformen der Figuren 2 bis 4 wird der Systemdruck oder Hauptdruck mit Hilfe eines direkt gesteuerten Hauptdruckventils 35; 45 eingestellt.

Der Ausgang der Hydraulikpumpe 4 ist über die Hauptdruckventileinrichtung 5 beziehungsweise das Hauptdruckventil 35; 45 mit einer Kühl- und/oder Filtereinrichtung VBK-T 7 verbindbar. Die Kühl- und/oder Filtereinrichtung VBK-T 7 ist mit einem Ventil ausgestattet und einem Kühlkreisvorspannventil VMD 8 vorgeschaltet. Eine Kühlventileinrichtung 10 ist der Kühl- und/oder Filtereinrichtung VBK-T 7 und dem Kühlkreisvorspannventil VMD 8 nachgeschaltet. Die Kühlventileinrichtung 10 ist einer ersten Kupplungskühlung 11 und einer zweiten Kupplungskühlung 12 vorgeschaltet.

Der Ausgang der Hydraulikpumpe 4 steht mit einer Teilgetriebedruckregelung 15 in Verbindung. Der Teilgetriebedruckregelung 15 ist eine Kupplungsdruckventileinrichtung 16 nachgeschaltet. Die Kupplungsdruckventileinrichtung 16 wiederum ist mit einer Gangstellaktorik 18 verschaltet.

Über die Kupplungsdruckventileinrichtung 16 werden eine erste Betätigungseinrichtung 21 für eine erste Kupplung und eine zweite Betätigungseinrichtung 22 für eine zweite Kupplung angesteuert. Zu diesem Zweck umfasst die Kupplungsdruckventileinrichtung 16 ein erstes Kupplungsdruckventil VKP1 und ein zweites Kupplungsdruckventil VKP2.

Die Gangstellaktorik 18 umfasst vier Gangsteller GS1, GS2, GS3 und GS4. Jedem der Gangsteller GS1 bis GS4 ist eine Gangstellventileinrichtung VGQ1, VGQ2, VGQ3 und VGQ4 zugeordnet. Der Gangsteller GS1 dient zur Darstellung eines zweiten und eines vierten Gangs. Der Gangsteller GS2 dient zur Darstellung eines ersten und eines dritten Gangs. Der Gangsteller GS3 dient zur Darstellung eines fünften und eines siebten Gangs. Der Gangsteller GS4 dient zur Darstellung eines sechsten und eines achten Gangs. Durch eine gestrichelte Linie 24 ist ein Vorhalt für einen fünften Gangsteller GS5 angedeutet.

Durch eine gestrichelte Linie 25 ist ein Vorhalt für einen "Park by wire" Systemdruckanschluss angedeutet. Durch den "Park by wire" Systemdruckanschluss kann ein Parkzustand beziehungsweise eine Parkstellung dargestellt werden.

Die einzelnen Ventile sind wie folgt bezeichnet:
Gangstellerventil (Gangaktorik): VGQ
Hauptdruckventil mit Hauptdruckvorsteuerung: VSys + VpSys
Druckregler für die Gangsteller: VpTG
Druckregelventil zur Vorsteuerung von den VpTGs: VpTGVst
Kühlölventile: VKU
Kühlkreisvorspannventil (Kühlkreisversorgung): VMD.

Durch die in den Figuren 1 bis 7 dargestellte hydraulische Steuerung oder Hydrauliksteuerung 1; 30; 40; 50; 60; 70; 80 wird die Ansteuerung von zwei Kupplungen, vier Schaltgabeln (acht Gänge) inklusive Kupplungskühlung ermöglicht. Optional kann auch eine "Park by wire" Funktionalität dargestellt werden. Durch die erfindungsgemäße Verschaltung der einzelnen Hydraulikelemente kann der Energiebedarf der Getriebesteuerung so gering wie möglich gehalten werden, bei möglichst niedrigen Herstellkosten für die Hydraulik. Die in den Figuren 1 bis 7 dargestellten Schaltbilder ermöglicht die Verwendung von nahezu identischen Elektromagneten, was hohe Stückzahlen und somit geringe Kosten ermöglicht.

Bei der in Figur 1 dargestellten Hydrauliksteuerung 1 wurden herkömmliche Teilgetriebedruckregler durch direkt gesteuerte Teilgetriebedruckregler 28, 29 ersetzt. Herkömmliche Vorsteuerventile können entfallen. Dadurch kann vorteilhaft für jedes entfallene Vorsteuerventil ein Kolben und eine Feder eingespart werden. Darüber hinaus entfällt eine Ventilbohrung für das jeweilige Vorsteuerventil, wodurch der Bauraum reduziert wird. Dabei werden bewusst Nachteile in Kauf genommen, wie eine höhere Anfälligkeit der Teilgetriebedruckregelung gegenüber Strömungskräften an den Teilgetriebedruckreglern 28, 29.

Bei der in Figur 2 dargestellten Hydrauliksteuerung 30 sind zwei Kühlölventile 31, 32 durch ein gemeinsames Vorsteuerventil oder Pilotventil 34 angesteuert. Durch das zusätzliche gemeinsame Vorsteuerventil 34 können zwei in Figur 1 dargestellte Elektromagnete an den Kühlölventilen 31, 32 entfallen.

Die Umsetzung des Kennlinienverhaltens der beiden Kühlölventile 31, 32 kann durch eine "fallende" und eine "steigende" Ventilkennlinie gelöst werden. Alternativ kann die Umsetzung des Kennlinienverhaltens mit verschiedenen Federvorspannungen der Kühlölventile 31, 32 gelöst werden. Bei dem in Figur 2 dargestellten Ausführungsbeispiel weisen beide Kühlölventile 31, 32 eine fallende Ventilkennlinie auf.

Durch die erfindungsgemäße Ansteuerung der beiden Kühlölventile 31, 32 mit einem gemeinsamen Vorsteuerventil 34 kann der Strombereich (Regel-/Steuerbereich) eines Magneten auf zwei Ventile aufgeteilt werden. Dabei wird bewusst der Nachteil in Kauf genommen, dass die Strom-Volumenstromauflösung um fünfzig Prozent eingeschränkt wird. Daraus ergibt sich der Vorteil, dass ein Elektromagnet entfällt. Durch den Entfall des Elektromagneten werden auch die Ansteuerung sowie der Bauraum des Elektromagneten eingespart.

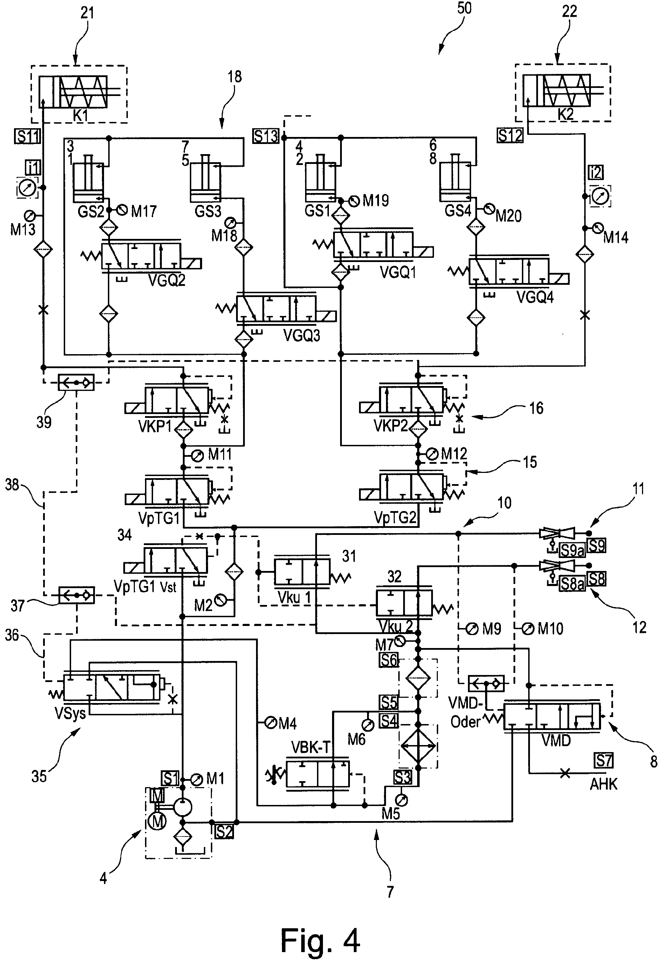

Gemäß einem weiteren Aspekt der Erfindung wird ein Hauptdruckventil 35 über eine Steuerleitung 36 und ein erstes Oder-Glied 37 angesteuert. Das erste Oder-Glied 37 ist über eine weitere Steuerleitung 38 mit einem zweiten Oder-Glied 39 verbunden. Das zweite Oder-Glied 39 ist über eine erste Steuerleitung mit einem ersten Kupplungsdruck der ersten Betätigungseinrichtung 21 beaufschlagt. Über eine zweite Steuerleitung ist das zweite Oder-Glied 39 mit einem zweiten Kupplungsdruck der zweiten Betätigungseinrichtung 22 beaufschlagt. Das erste Oder-Glied 37 ist über eine weitere Steuerleitung mit Kühlöldruck beaufschlagt. Die Funktion des Hauptdruckventils 35 wird unter Bezugnahme auf Figur 4 im Folgenden noch erläutert.

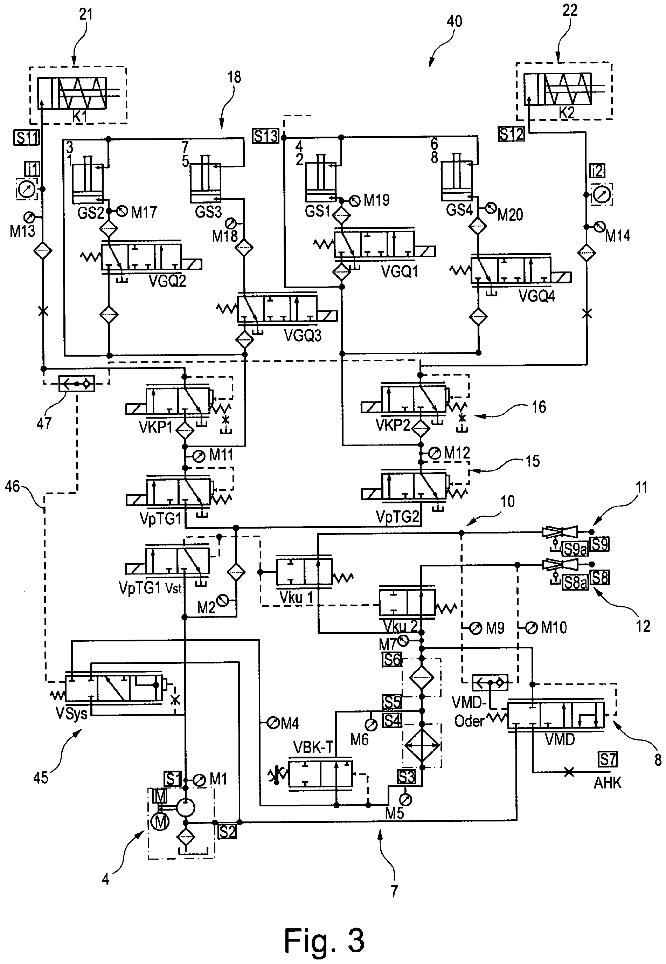

Die in Figur 3 dargestellte Hydrauliksteuerung 40 umfasst ein Hauptdruckventil 45, das über eine Steuerleitung 46 steuerungsmäßig mit einem Oder-Glied 47 verbunden ist. Das Oder-Glied 47 ist über eine erste Steuerleitung mit einem ersten Kupplungsdruck der Betätigungseinrichtung 21 beaufschlagt. Über eine zweite Steuerleitung ist das Oder-Glied 47 mit einem zweiten Kupplungsdruck der Betätigungseinrichtung 22 beaufschlagt. Der Systemhauptdruck wird mit einem festen Offset mittels Druckruckführungen der beiden Kupplungsdrücke eingestellt. Mit Hilfe des Oder-Glieds 47 wird immer der höchste Kupplungsdruck als Pilotdruck zugeführt.

Bei der in Figur 4 dargestellten Hydrauliksteuerung 50 ist wie bei der in Figur 2 dargestellten Hydrauliksteuerung 30 gegenüber der in Figur 3 dargestellten Hydrauliksteuerung 40 über das Oder-Glied 37 noch der Kühlöldruck steuerungsmäßig an das Hauptdruckventil 35 angebunden. Das liefert den Vorteil, dass ein Hauptdruckvorsteuerventil inklusive Elektromagnet entfällt. Dabei wird bewusst der Nachteil in Kauf genommen, dass es bei der Hauptdruckniveaueinstellung keine aktive Eingriffsmöglichkeit mehr gibt. Es wird immer ein konstanter Offset zum aktuell höchsten Kupplungsdruck beziehungsweise Kühlölversorgungsdruck eingestellt, und zwar je nachdem, welcher der Drücke am höchsten ist.

Anstelle der Rückführung der beiden Kupplungsdrücke könnte auch mindestens einer oder beide Teilgetriebedrücke in gleicher Form steuerungsmäßig an das Hauptdruckventil 35 angebunden werden. Die Teilgetriebedrücke könnten zum Beispiel zwischen der Teilgetriebedruckregelung 15 und der Kupplungsdruckventileinrichtung 16 abgegriffen werden.

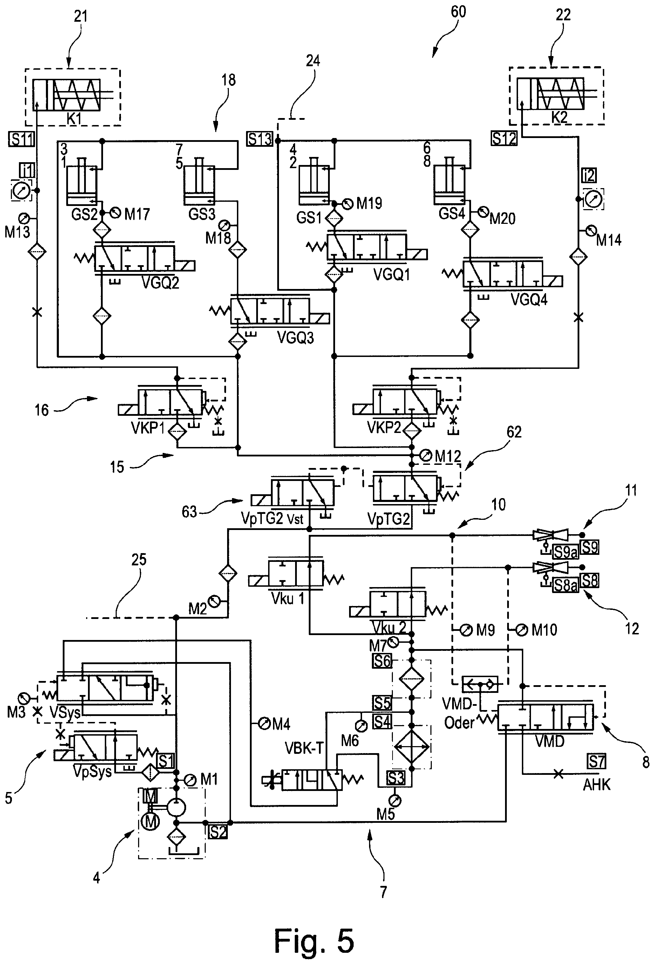

Die in Figur 5 dargestellte Hydrauliksteuerung 60 umfasst einen zentralen Teilgetriebedruckregler 62, der durch ein Pilotventil 63 vorgesteuert ist. Gemäß einer weiteren Ausführungsform ist der zentrale Teilgetriebedruckregler 62, anders als dargestellt, direkt gesteuert. Bei der Verwendung des zentralen Getriebedruckreglers 62 wird bewusst der Nachteil in Kauf genommen, dass die Teilgetriebedrücke nicht mehr getrennt regelbar sind.

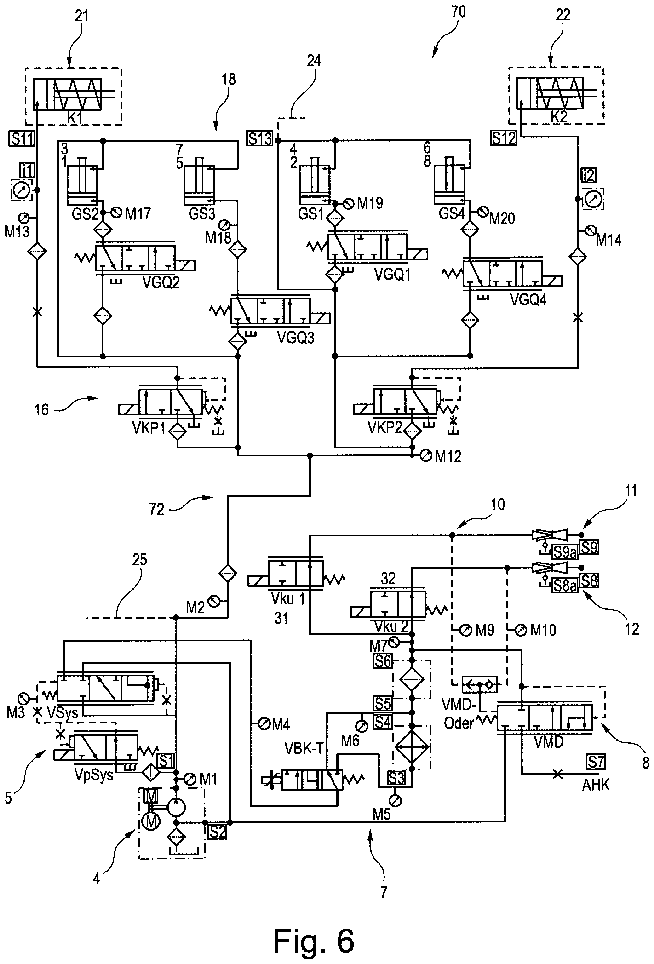

Die in Figur 6 dargestellte Hydrauliksteuerung 70 ist ganz ohne Teilgetriebedruckregler ausgeführt. Der Ausgang der Hydraulikpumpe 4 steht über eine Verbindungsleitung 72 direkt mit der Kupplungsdruckventileinrichtung 16 und der Gangstellaktorik 18 in Verbindung. Dabei wird bewusst der Nachteil in Kauf genommen, dass die Teilgetriebedrücke nicht mehr regelbar sind.

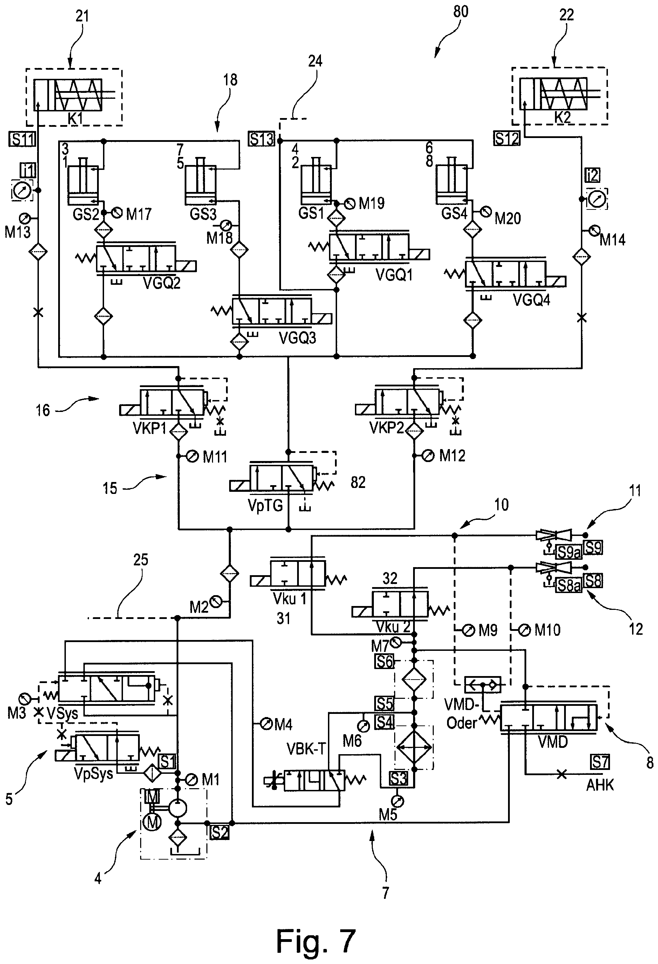

Die in Figur 7 dargestellte Hydrauliksteuerung 80 umfasst einen zentralen Teilgetriebedruckregler 82. Der dargestellte Teilgetriebedruckregler 82 ist direkt gesteuert. Gemäß einer nicht dargestellten Ausführungsform kann der zentrale Teilgetriebedruckregler 82 auch vorgesteuert sein. Bei der Verwendung des zentralen Teilgetriebedruckreglers 82 wird bewusst der Nachteil in Kauf genommen, dass die Teilgetriebedrücke nicht mehr getrennt regelbar sind. Der zentrale Teilgetriebedruckregler 82 ist in Reihe zwischen die Kupplungskühlung 11 und die Gangstellaktorik 18 geschaltet. Gleichzeitig ist der zentrale Teilgetriebedruckregler 82 mit der Kupplungsdruckventileinrichtung 16 verschaltet.

### Bezuaszeichenliste

- 1: Hydrauliksteuerung
- 4: Hydraulikpumpe
- 5: Hauptdruckventileinrichtung
- 7: Kühl- und/oder Filtereinrichtung
- 8: Kühlkreisvorspannventil
- 10: Kühlölventileinrichtung
- 11: erste Kupplungskühlung
- 12: zweite Kupplungskühlung
- 15: Teilgetriebedruckregelung
- 16: Kupplungsdruckventileinrichtung
- 18: Gangstellaktorik
- 21: Betätigungseinrichtung
- 22: Betätigungseinrichtung
- 24: gestrichelte Linie
- 25: gestrichelte Linie
- 28: Teilgetriebedruckregler
- 29: Teilgetriebedruckregler
- 30: Hydrauliksteuerung
- 31: Kühlölventil
- 32: Kühlölventil
- 34: gemeinsames Vorsteuerventil
- 35: Hauptdruckventil
- 36: Steuerleitung
- 37: erstes Oder-Glied
- 38: Steuerleitung
- 39: zweites Oder-Glied
- 40: Hydrauliksteuerung
- 45: Hauptdruckventil
- 46: Steuerleitung
- 47: Oder-Glied
- 50: Hydrauliksteuerung
- 60: Hydrauliksteuerung
- 62: zentraler Teilgetriebedruckregler
- 63: Pilotventil
- 70: Hydrauliksteuerung
- 72: Verbindungsleitung
- 80: Hydrauliksteuerung
- 82: zentraler Teilgetriebedruckregler

## Patentansprüche

1. Hydraulische Steuerung eines Doppelkupplungsgetriebes zum Ansteuern einer Mehrzahl von hydraulischen Schaltzylindern zum Schalten von Gängen des Doppelkupplungsgetriebes, enthaltend zumindest ein Hauptdruckventil VSys zum Einstellen eines Haupt- oder Systemdrucks, mindestens drei Gangstellerventile VGQ, welche den hydraulischen Schaltzylindern zugeordnet sind, mindestens zwei einer ersten und einer zweiten Kupplungskühlung (11, 12) vorgeschalteten Kühlölventile VKU sowie ein Kühlkreisvorspannventil VMD, **dadurch gekennzeichnet, dass** die Kühlölventile VKU (31, 32) mittels eines gemeinsamen Pilotventils VKvst (34) vorgesteuert sind.

2. Hydraulische Steuerung nach Anspruch 1, **dadurch gekennzeichnet, dass** mindestens ein Teilgetriebedruckregler (28,29) als direkt gesteuertes Ventil ausgeführt ist, insbesondere zwei Teilgetriebedruckregler (28,29) als direkt gesteuerte Ventile ausgeführt sind.

3. Hydraulische Steuerung nach einem der vorhergehenden Ansprüche, **dadurch gekennzeichnet, dass** ein Systemhauptdruck mittels Druckrückführungen von zwei Kupplungsdrücken eingestellt wird.

4. Hydraulische Steuerung nach einem der vorhergehenden Ansprüche, **dadurch gekennzeichnet, dass** der Systemhauptdruck zusätzlich mittels eines Kühlöldrucks eingestellt wird.

5. Hydraulische Steuerung nach einem der vorhergehenden Ansprüche, **dadurch gekennzeichnet, dass** eine Teilgetriebedruckregelung (15) nur einen zentralen Teilgetriebedruckregler VpTG (62;82) umfasst.

6. Hydraulische Steuerung nach dem Anspruch 6, **dadurch gekennzeichnet, dass** der zentrale Teilgetriebedruckregler VpTG (82) in Reihe zwischen das Hauptdruckventil (VSys) und eine Gangstellaktorik (18) geschaltet ist.

7. Hydraulische Steuerung nach einem der vorhergehenden Ansprüche, **dadurch gekennzeichnet, dass** zwei Teilgetriebe direkt mit einem beziehungsweise dem Systemhauptdruck beaufschlagt sind.

8. Hydraulische Steuerung nach einem der vorhergehenden Ansprüche, **dadurch gekennzeichnet, dass** die hydraulische Steuerung (1;30;40;50;60;70;80) eine Hydraulikpumpe (4) umfasst, die elektrisch und/oder mittels eines Verbrennungsmotors angetrieben ist.

## Claims

1. Hydraulic controller of a double clutch transmission for actuating a plurality of hydraulic shifting cylinders for shifting gears of the double clutch transmission, comprising at least one main pressure valve VSys for setting a main or system pressure, at least three gear selector valves VGQ which are assigned to the hydraulic shifting cylinders, at least two cooling oil valves VKU which are connected upstream of a first and a second clutch cooling means (11, 12), and a cooling circuit preloading valve VMD, **characterized in that** the cooling oil valves VKU (31, 32) are pilot-controlled by means of a common pilot valve VKvst (34).

2. Hydraulic controller according to Claim 1, **characterized in that** at least one component transmission pressure regulator (28, 29) is configured as a directly controlled valve, and, in particular, two component transmission pressure regulators (28, 29) are configured as directly controlled valves.

3. Hydraulic controller according to either of the preceding claims, **characterized in that** a system main pressure is set by means of pressure return means of two clutch pressures.

4. Hydraulic controller according to one of the preceding claims, **characterized in that** the system main pressure is set by means of a cooling oil pressure.

5. Hydraulic controller according to one of the preceding claims, **characterized in that** a component transmission pressure regulation means (15) comprises only a central component transmission pressure regulator VpTG (62; 82).

6. Hydraulic controller according to Claim 6, **characterized in that** the central component transmission pressure regulator VpTG (82) is connected in series between the main pressure valve (VSys) and a gear selector actuator system (18).

7. Hydraulic controller according to one of the preceding claims, **characterized in that** two component transmissions are loaded directly with a or the system main pressure.

8. Hydraulic controller according to one of the preceding claims, **characterized in that** the hydraulic controller (1; 30; 40; 50; 60; 70; 80) comprises a hydraulic pump (4) which is driven electrically and/or by means of an internal combustion engine.

## Revendications

1. Commande hydraulique d'une boîte de vitesses à double embrayage pour la commande d'une multiplicité de cylindres de commutation hydrauliques pour la commutation de rapports de la boîte de vitesses à double embrayage, contenant au moins une vanne de pression principale VSys pour le réglage d'une pression principale ou de système, au moins trois soupapes à champignon de rapport VGQ, qui sont associées aux cylindres de commutation hydrauliques, au moins deux vannes à huile de refroidissement VKU montées avant un premier et un second refroidissement d'embrayage (11, 12) ainsi qu'une vanne de précontrainte de circuit de refroidissement VMD, **caractérisée en ce que** les vannes à huile de refroidissement VKU (31, 32) sont précommandées au moyen d'une vanne pilote commune VKVst (34).

2. Commande hydraulique selon la revendication 1, **caractérisée en ce qu'**au moins un régulateur de pression de boîte de vitesses partiel (28, 29) est réalisé sous forme de vanne commandée directement, en particulier deux régulateurs de pression de boîte de vitesses partiels (28, 29) sont réalisés sous forme de vannes commandées directement.

3. Commande hydraulique selon l'une quelconque des revendications précédentes, **caractérisée en ce qu'**une pression principale de système est réglée au moyen de retours de pression de deux pressions d'embrayage.

4. Commande hydraulique selon l'une quelconque des revendications précédentes, **caractérisée en ce que** la pression principale de système est en outre réglée au moyen d'une pression d'huile de refroidissement.

5. Commande hydraulique selon l'une quelconque des revendications précédentes, **caractérisée en ce qu'**une régulation de pression de boîte de vitesses partielle (15) ne comprend qu'un seul régulateur de pression de boîte de vitesses partiel central VpTG (62; 82).

6. Commande hydraulique selon la revendication 6, **caractérisée en ce que** le régulateur de pression de boîte de vitesses partiel central VpTG (82) est connecté en série entre la vanne de pression principale (VSys) et un actionneur de positionnement de rapport (18).

7. Commande hydraulique selon l'une quelconque des revendications précédentes, **caractérisée en ce que** deux boîtes de vitesses partielles sont soumises à une ou à la pression principale de système.

8. Commande hydraulique selon l'une quelconque des revendications précédentes, **caractérisée en ce que** la commande hydraulique (1; 30; 40; 50; 60; 70; 80) comprend une pompe hydraulique (4), qui est entraînée de façon électrique et/ou au moyen d'un moteur à combustion interne.
